# EUROPEAN PATENT APPLICATION

(11) **EP 1 398 224 A1**
(43) Date of publication of application: **17.03.2004**
(21) Application number: 03077275.0
(22) Date of filing: 21.07.2003
(51) Int. Cl.: B60R 19/34, B60R 19/26

(54) **Improved crash box**

(30) Priority: 10.09.2002 GB 0220945
(71) Applicant: L & L Products Inc., Romeo, MI 48065 (US)
(72) Inventor: BRAYMAND, Frank, 67129 Molsheim, Cedex (FR)
(74) Representative: Bawden, Peter Charles

(57) **Abstract**

A crash box consisting of an outer hollow member (1) and internal member (2) slideably mounted within the outer hollow member, said internal member being provided with compression reducing arms (3) extending towards the internal surface of the outer hollow member, the compression reducing arms are provided with expandable material (4) at their extremities adjacent to the inner surface of the hollow external member.

## Description

The present invention relates to improved crash boxes and shock absorbers used in automobiles.

In some automobiles a crash box or shock absorber is located between the outer front bumper of the automobile and the front rail, which is the most forward support for the engine. The crash box is designed to absorb the impact of minor front accidents to prevent damage to the front rail and the engine. The crash box serves the additional function of reducing the damage caused by major accidents. The crash box is designed to absorb the energy of the initial impact and reduce transmitted force to beyond the limit of the front rail.

Currently crash boxes are tubes with undulations and may have a honeycomb structure. The present invention is concerned with improved designs of crash box.

According to the present invention a crash box is provided which consists of an outer hollow member and an internal member slideably mounted within the outer hollow member, said internal member being provided with compression reducing arms extending towards the internal surface of the outer hollow member.

In a preferred embodiment the compression reducing arms are provided with expandable material at their extremities adjacent to the inner surface of the hollow external member. In yet a further preferment the expandable material is a structural adhesive foam and the dimensions of the internal member are such that the expandable material may be foamed to fill the gap between the extremities of the arms and the inner surface of the outer hollow member to form a bond between the arms and the outer hollow member.

In a further embodiment the expandable material is selected so that it will foam under the conditions to which the vehicle frame is subjected in the e coat oven. The e coat process is one in which an anticorrosion coating is deposited over the vehicle metal subframe by electrolysis and the metal components of the vehicle act as an electrode. After deposition the anticorrosion coating layer is dried and baked in an oven. In order for the e coat process to provide an effective anticorrosion coating it is important that the fluid has access to all the metal surface. Accordingly it is important that there is sufficient space between the extremities of the compression reducing arms and the inner surface of the hollow member to allow the anticorrosion fluid to pass therebetween to deposit the anticorrosion coating on the inner surface of the hollow member. After deposition of the anticorrosion coating the vehicle is baked in an oven and, accordingly, when structural foam is provided on the extremities of the internal member it is convenient that the foam is such that it will expand under the conditions in the oven to bridge the gap between the extremities of the internal member and the inner surface of the hollow member to form a bond between the two.

In a preferred embodiment spacers are provided to hold the internal member away from the internal surface of the external member to allow the anticorrosion fluid to contact, substantially the entire internal surface of the external member. The spacers may be located on either or both members.

The crash box may be of any suitable shape to match the size, shape and other requirements of the vehicle. For example, the external hollow member may be cylindrical, hexagonal, rectangular or square in cross section as required a hexagonal cross-section is preferred. The external hollow member may be made of any suitable material for example it may be made of metal or plastic. Examples of metals then can be used include steel which may be rolled or stamped to produce the external hollow member of the desired shape and aluminium which may be extruded. Where plastic is used it should be a rigid plastic material such as polypropylene, or nylon, glass filled polyamides is particularly preferred, the use of thermoplastics has the benefit that the hollow cross section may be extruded.

The internal member will be shaped according to the shape of the hollow external member and the number and distribution of the arms provided will be determined by the needs and the size and shape of the crash box. The arms preferably extend along the entire length of the crash box. As with the hollow external member the internal member may be made of any suitable material particularly metal or plastic. Where it is made of metal it may be of steel or aluminium although extruded aluminium is preferred. Similarly a rigid thermoplastic such as polypropylene, nylon or glass filled nylon is preferred and this allows the member to be formed by extrusion. The choice of the optimum distribution of the arms will depend upon the shape and thickness of the external member.

Where a foamable material is to be provided on the extremities of the arms of the internal member it may be provided by overmoulding or simply adhered perhaps by extrusion alternatively it may be attached to the arms using push pins. The push pins can also act as spacers and locators for the internal member within the external member. The expandable adhesive material serves two main functions, it will expand to fill the space between the reinforcing member and the interior of the vehicle structure and it will also bond to the interior wall of the structure. Accordingly, expandable adhesive material means that the material can be activated to both expand (typically foam) and to act as an adhesive. Activation thus enables the expandable material to expand and fill a gap between the external hollow member and the compression reducing arms of the reinforcing member to bond the reinforcing member to the internal surface of the hollow structure. Accordingly the expandable adhesive must expand at the desired temperature and be sufficiently adhesive to firmly bond the reinforcing member inside the external hollow member. Once foamed the foam should preferably be sufficiently strong that it does not contribute any weakness to the overall reinforcing effect provided.

Prior to activation, the expandable adhesive material should be dry and not tacky to the touch, since this facilitates shipping and handling and prevents contamination.

Examples of preferred foamable materials include foamable epoxy-based resins and examples of such materials are the products L5206, L5207 and L5209 which are commercial available from L & L Products of Rome Michigan USA, and the Betacore Products BC 5204, 5206, 5205 and 5208 available from Core Products, Strasbourg, France. The product should be chosen according to the rate of expansion and foam densities required. It is further preferred that it expand at the temperatures experienced in the electrocoat baking oven, typically 130°C to 150°C.

The new crash boxes of the present invention have the benefit that since they have two separate components the components may be of different length. This can be useful in that the inner member can be shorter than the outer hollow member which may enable the extremities of the outer hollow member to compress to a greater extent upon impact which will reduce the initial peak force on impact thus causing less damage to the vehicle.

It is also important that the internal member be securely located within the external member and will not move during the e coat or baking process. In this way it is possible to ensure that the compression reducing arms face in the optimum direction. Spacers and/or locating pins can be used to serve this effect.

The invention is illustrated by reference to the accompanying drawings in which:
Figure 1 shows a rectangular cross section crash box according to the present invention.
Figure 2 shows an alternative form of rectangular section crash box according to the present invention.
Figure 3 shows a hexagonal cross section crash box according to the present invention.
Figure 4 shows the location of crash boxes of Figure 3 in an automobile.

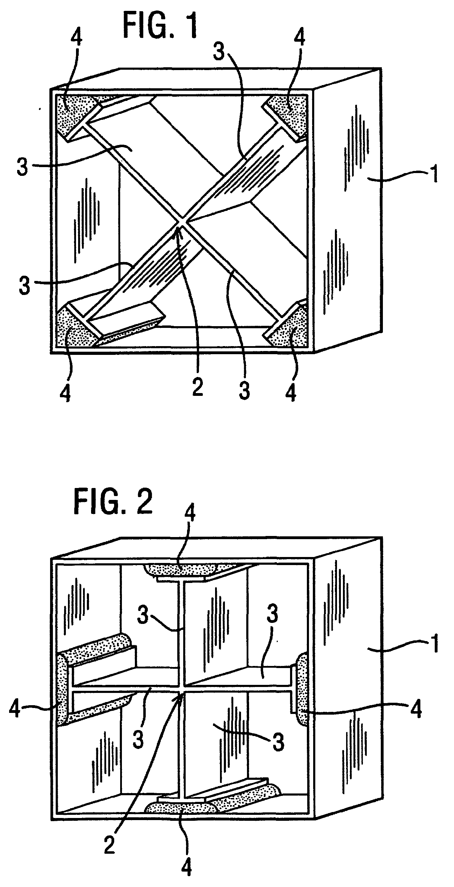

Figure 1 therefore shows a crash box consisting of an outer hollow shell (1 ) of square cross section. Within shell (1 ) is located a cruciform structure (2) with 4 arms (3) projecting into the corners of the square cross section of shell (1). Foamable material (4) is located at the extremities of the arms (3). Figure 2 shows a variation of Figure 1 in which the four arms (3) project to the centre points of the sides of the square cross section (1 ).

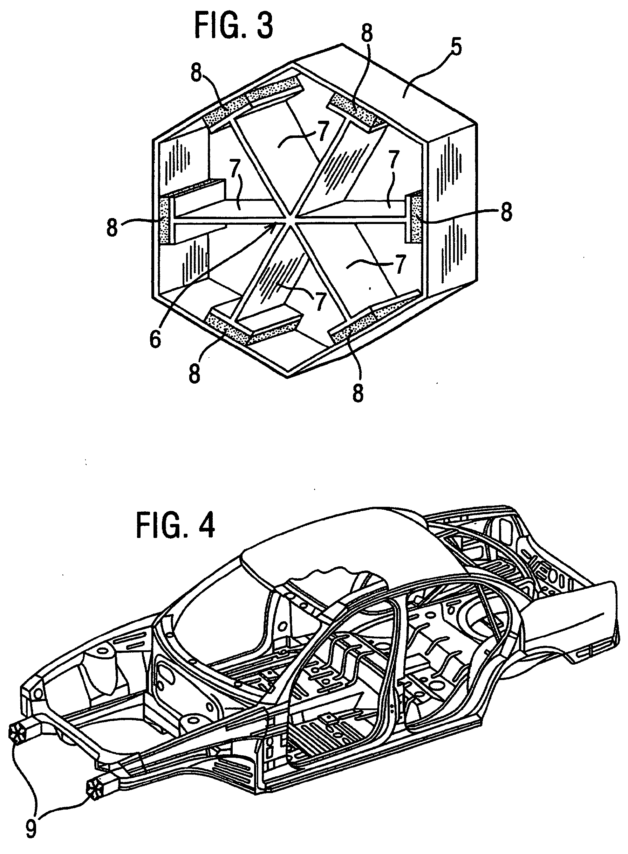

In the embodiment shown in Figure 3 the outer shell (5) of the crash box has a hexagonal cross section. Within the shell is located a six arm member (6) with six arms (7) extending to the mid points of the six sides of outer shell (5) here again foamable material (8) is provided at the extremities of each of the six arms (7). Figure 4 shows how two crash boxes according to Figure 3 (9) are located in the vehicle to provide impact resistance for the front rad of the vehicle.

In a preferred system the outer shell is extruded from rigid thermoplastic material, as is the internal armed member. The foamable material is stuck to the extremities of the arms. The inner member is then inserted within the hollow member, the crash box put in place in the vehicle which is then subject to the e coat anticorrosion process. The entire structure is then baked at a temperature which causes the foamable material to expand, fill the gap between the outer shell and the arms of reinforcing member and form an adhesive bond between the two. Use of the crash box results in a more uniform force on impact with less damage, alternatively it may allow use of a smaller shock absorber.

## Claims

1. A crash box consisting of an outer hollow member and an internal member slideably mounted within the outer hollow member, said internal member being provided with compression reducing arms extending towards the internal surface of the outer hollow member.

2. A crash box according to Claim 1 in which the compression reducing arms are provided with expandable material at their extremities adjacent to the inner surface of the hollow external member.

3. A crash box according to Claim 2 in which the expandable material is a structural adhesive foam.

4. A crash box according to Claim 2 or Claim 3 in which the expandable material is selected so that it will foam under the conditions into which the vehicle frame is subjected in the e coat oven.

5. A crash box according to any of the preceding Claims in which spacers are provided to hold the internal member away from the internal surface of the external member to allow the anticorrosion fluid to contact, substantially the entire internal surface of the external member.

6. A crash box according to Claim 4 in which the spacers are provided on the internal member.

7. A crash box according to any of the preceding Claims in which the external hollow member is cylindrical, hexagonal, rectangular or square in cross section.

8. A crash box according to any of the preceding Claims in which the external hollow member is made of metal.

9. A crash box according to any of Claims 1 to 6 in which the external hollow member is made of rigid plastic material such as polypropylene, or nylon, optionally filled.

10. A crash box according to any of the preceding Claims in which the internal member is made of metal.

11. A crash box according to any of Claims 1 to 9 in which the internal member is made of rigid thermoplastic material such as polypropylene, nylon or glass filled nylon.

12. A crash box according to any of Claims 2 to 10 in which the foamable material is attached to the extremity of the compression reducing arms by push pins.

13. A crash box according to Claim 11 in which the push pins act as spacers between the extremities of the compression reducing arms and the external hollow member.

14. A crash box according to any of the preceding Claims in which the inner member is shorter than the outer hollow member.

15. A crash box according to Claim 13 in which it is shorter by from 1 centimeter to 10 centimeters.
